# EUROPEAN PATENT SPECIFICATION

(11) **EP 2 448 087 B1**
(45) Date of publication and mention of the grant of the patent: **04.01.2023**
(21) Application number: 10290590.8
(22) Date of filing: 02.11.2010
(51) Int. Cl.: H02J 9/06, H02J 13/00

(54) **Reliable electrical distribution system with alternate power source**
Zuverlässiges elektrisches Verteilungssystem mit alternativer Energiequelle
Système de distribution électrique fiable doté d'une source d'alimentation alternative

(43) Date of publication of application: 02.05.2012
(73) Proprietor: Schneider Electric USA, Inc., Palatine, Illinois 60067 (US)
(72) Inventor: Hancock, Martin A., Victoria, BC V8X 3S8 (CA); Hirschbold, Markus F., Victoria, BC V8N 4A1 (CA); Cowan, Peter, Victoria, BC V8X 3E5 (CA); Eggink, John Charles, Brentwood, TN 37027 (US); Hypolite, Jean-Marie, 38240 Meylan (FR)
(74) Representative: Grünecker Patent- und Rechtsanwälte PartG mbB

(56) References cited:
- WO-A2-2008/006116
- US-A1- 2005 195 090
- US-A1- 2006 028 347
- US-A1- 2009 150 100
- US-B1- 7 599 171
- ABB: "MicroSCADA Pro, DMS 600 *4.1: Operation Manual", 20050228, PAGE(S) 1 - 166 , 28 February 2005 (2005-02-28), XP002500255, Retrieved from the Internet: URL:http://library.abb.com/global/scot/sco t229.nsf/veritydisplay/a1b767ee53dd1462c22 5703b002caee0/$File/DMS600_Operation%20Man ualENc.pdf [retrieved on 1077]

## Description

### TECHNICAL FIELD

The present invention relates to communication systems for providing emergency power and more specifically to a communications network to monitor a system to determine whether to apply emergency power.

### BACKGROUND

Healthcare facilities such as hospitals rely on uninterrupted power supply especially to critical areas such as the emergency room. For example, there are different departments where uninterrupted energy is mandatory, and coordinated maintenance is required. Operating rooms, intensive care units, data centers, are typical areas where electrical power is essential and even vital. Such facilities typically include a normal electrical system which includes both non-essential circuits and equipment not required to have an alternate power source, and essential electrical systems. Such essential electrical systems include an emergency power supply system (EPSS) which includes circuits and equipment used to supply alternate power to loads vital to the protection of life and safety, and an equipment system which includes circuits and equipment used to supply power equipment. These may include patient-care related circuits, such as the ICU or operating rooms, as well as emergency lighting, alarm systems, battery chargers, data centers, and all the electrical infrastructure equipment needed to ensure that vital or life safety equipment power interruptions are kept to less than a maximum legislated duration (typically 10 seconds in the U.S.). A lower level of essential systems may provide power for security, fire suppression and other systems.

Emergency power supply systems include one or more alternate power sources such as UPS or genset which can supply the healthcare facility with power during an interruption of the main utility supplied power. Power is transferred from the main utility supply to the alternate power sources using automatic transfer switches (ATS) whenever the main utility supply is interrupted. A facility may have one or several independent EPSSs.

US 2009/150100 A1 shows methods and systems of using an automatic transfer switch in a building for switching from a main utility power source to an alternate power source, when the main utility power source fails. The automatic transfer switch sends a request to an alternate power control interface for back up power when such failure occurs, and the alternate power control interface transmits an enable signal to the automatic transfer switch to switch to the alternate power source.

Depending on the jurisdiction of the facility, different regulatory requirements dictate how the EPS systems need to be maintained and tested. Many countries mandate specific compliance standards for generator testing and some require formal reports for government agencies and many for audit purposes. These compliance standards may be mandated by federal governments, local (state/provincial) governments, or by private organizations. In the U.S., for example, hospitals are required to test their EPSSs at least 12 times a year, every 20 to 40 days, for 30 minutes at or above the manufacturer's recommended engine exhaust temperature or at a minimum load of 30% of the generators' nameplate rating. Also, maximum transfer times of less than 10 seconds are typically required.

It is common for back-up generators to fail to start or fail to run under full load due to insufficient testing and maintenance. In fact, in some cases, nominal run tests can actually create problems within the gensets that can affect operation in a true emergency situation (like wet stacking, where unburned fuel or carbon builds up in the exhaust system when generator run times are too short or are performed outside of the recommended parameters from the manufacturer).

Problems stemming from power availability and quality are often underestimated and can have serious consequences on human life, finances, technical operations and the environment, not to mention the impact on a hospital's image. There is no such thing as zero risk, but failures can be prevented by adopting a "reliability" approach by adopting measures to improve the reliability of the electrical distribution infrastructure in a healthcare facility. This strategy, on the whole, consists of correlating facility managers' needs with qualified, proven technical solutions, developed specifically for critical activities, throughout the facility.

Thus, there is a need for an integrated system to ensure that electrical distribution is maintained to critical areas in a healthcare facility such as a hospital. It is the object of the present invention to provide an improved electrical distribution system for a healthcare facility having electrical loads that include loads requiring highly reliable power delivery, and a method of managing such an improved electrical distribution system. This object is solved by the subject matter of the independent claims 1 to 3.

### SUMMARY

In accordance with one embodiment, a method is provided for managing an electrical power distribution system for a healthcare facility having electrical loads that include critical loads requiring highly reliable power delivery, a main utility power source for supplying power to the loads via the power distribution system, an alternative power source for supplying power to at least certain of the loads in the event of disruption of power from the main utility source, a controller receiving signals from the devices in the power distribution system, and a communications network coupled to the controller and the devices in the power distribution system. The controller receives, over the communications network, information regarding the delivery of power to the loads from the main utility source, the information including the occurrence of trip conditions that interrupt the delivery of power to identified loads. The controller also transmits, over the communications network, an alarm when a trip condition occurs so that action can be taken to resume the delivery of power to loads to which power delivery has been interrupted; stores and periodically evaluates information regarding the occurrences of trip conditions and uses of the alternate power source by load; and transmits, over the communications network, an alert when the evaluation identifies a performance change for any load. A maintenance action is initiated in response to the alert, and the alert is communicated to a remote facilities management station in the format of diagnostic information in real time.

In specific implementations, the power distribution system includes both low-voltage and medium-voltage loop architectures; the diagnostic information includes information regarding the remote re-closing of circuit breakers; the diagnostic information initiates a fault check to determine the causes of trip conditions and whether power delivery can be safely resumed; the alert is generated automatically by the remote facilities management station; the diagnostic information includes information originates in circuit breakers in the electrical distribution system; and/or a predictive maintenance or service call-out is transmitted in response to the receipt of information regarding a trip condition.

The foregoing and additional aspects of the present invention will be apparent to those of ordinary skill in the art in view of the detailed description of various embodiments, which is made with reference to the drawings, a brief description of which is provided next.

### BRIEF DESCRIPTION OF THE DRAWINGS

The invention will be better understood from the following description of preferred embodiments together with reference to the accompanying drawings, in which:
FIG. 1 is a block diagram of a reliability system in a facility integrating various components to insure availability of power
FIG. 2A and 2B are diagrams of two potential medium voltage loops for the reliability system of FIG. 1.
FIG. 2C is a diagram of a reconfigurable medium voltage loop for the reliability system of FIG. 1.
FIG. 3A is a diagram of one of the electrical crisis power restoration (ECPR) units.
FIG. 3B is a flow diagram of a process of responding to detected faults, using the ECPR units.
FIG. 3C is a schematic diagram of a short circuit tester included in each of the ECPR units.
FIG. 4 is a block diagram of the critical area system of the reliability system of FIG. 1.
FIG. 5 is a functional block diagram showing the automated emergency power supply system of the system in FIG. 1.
FIG. 6A is an essential or basic configuration of the automated emergency power supply system in FIG. 5.
FIG. 6B is an enhanced configuration of the automated emergency power supply system in FIG. 5.
FIG. 6C is a comprehensive configuration of the automated emergency power supply system in FIG. 5
FIG. 7 is a flow diagram of a problem solving service based on the reliability system in FIG. 1.
FIG. 8 is a flow diagram of an inventive process to evaluate information regarding occurrences of trip conditions using the reliability system of FIG. 1.
FIG. 9 is a flow diagram of a process, not covered by the claims, of conducting a coordination study using the reliability system of FIG. 1.
FIG. 10 is a flow diagram of a process, not covered by the claims, of monitoring information using the reliability system of FIG. 1.

### DETAILED DESCRIPTION

Although the invention will be described in connection with certain preferred embodiments, it will be understood that the invention is not limited to those particular embodiments. On the contrary, the invention is intended to cover all alternatives and modifications falling within the scope of the invention as defined by the appended claims.

The present example is directed toward a reliability system for critical areas of a facility such as a healthcare facility that guarantees the reliability and availability of power to allow processes and systems to continue working in all circumstances for critical loads in such areas requiring highly reliable power delivery. The disclosed reliability system integrates and allows for shared communication and management of multiple products and equipment together for healthcare facilities such as a hospital facility. The reliability system consists of many sub-components which are combined to monitor and interact to increase the overall safety, ensure traceability and improve reliability of the hospital facility's electrical infrastructure. The combined reliability system described below covers the power requirements from the service entrance to plug over the entire hospital facility and provide required high reliability of power. In the hospital facility, there are different departments where uninterrupted energy is mandatory, and coordinated maintenance is required. Operating rooms, intensive care units, data centers, are typical units where electrical power is essential and even vital. Of course, it is to be understood that the reliability system is explained in terms of a hospital facility, but may be applied for all types of critical buildings or campuses.

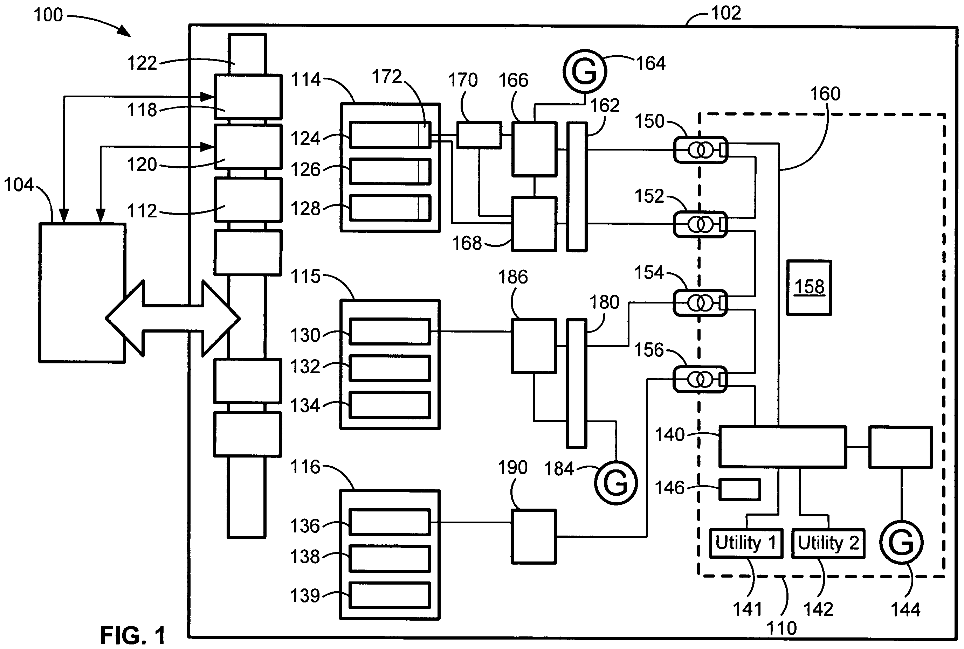

FIG. 1 is a block diagram of the components of a reliability system 100 in a healthcare facility such as a hospital facility 102. The hospital facility has electrical loads that include critical loads requiring highly reliable power delivery. There are several separate components that work in conjunction with each other to create the high reliability system 100. A main utility power source such as a medium voltage (MV) service entrance supplies power which flows through the entire electrical distribution network to the final distribution of loads in the operating room area and hospitality wards. The system combines the components of medium service entrance devices, medium voltage automatic transfer switch (ATS) loop reconfiguration, low voltage electrical distribution diagnostics (ECPR) units as part of an emergency crisis, prevention and recovery system (ECPR), an operating area system, low voltage switchboards, a low voltage ATS, a hospitality wards switchboard, emergency power supply systems (EPSS), power monitoring and the remote services into the total reliability system 100 for the hospital facility 102. Alternatively, when there is not a medium voltage and automatic transfer switch loop, the medium voltage system and the automatic transfer switch may be stand alone components.

In this example, the maintenance and operation of the system of the hospital facilities is outsourced to a third party facility manager such as an external third party service provider 104 who operates as the remote facilities manager. The combination of the advanced features of an emergency crisis prevention and recovery system (ECPR), power monitoring and remote managed services allow the third party to provide services through an online web portal. By enabling third parties to perform facility management, the complete electrical distribution network may be managed remotely and the hospital facility 102 is provided information such that they can make informed decisions on their operations. FIG. 1 shows the products/services that make up the reliability system 100.

The reliability system 100 includes a medium voltage loop system 110, an emergency crisis prevention and recovery system (ECPR) which may include a low voltage electrical distribution diagnostics system 112 (referred to hereinafter as "ECPR units"), a critical area system 114, a non-critical area 116, an emergency power supply system 118, an automated EPSS test system 120 and remote services provided by the remote service provider 104. The hospital facility 102 also includes a monitoring system 122 that interfaces with the emergency crisis prevention and recovery system (ECPR) 112 and other systems. The third party services provider 104 interfaces to external building systems such as HVAC, lighting fire, CCTV, access and electrical systems. The monitoring system 122 may be a supervisory control and data acquisition (SCADA) system or a building management system (BMS). The monitoring system 122 includes a communications network that provides communication data between various monitors of loads and other systems in the facility. The communications network also collects data from the various monitors and controllers, the ECPR system 112, the critical area system 114 and any other interoperable or compatible systems in the hospital facility 102. The physical hospital facility in this example includes interfaces with high critical areas that are covered by the critical area system 114, a moderate critical area which may be covered by a moderate critical system 115 and non-critical areas that are covered by the non-critical area system 116. The critical areas may include an operating room 124, a pre-operation ward 126 and an intensive care recovery unit 128. The moderate critical areas may be divided into sectors that represent buildings or wings 130 (security), 132 (medical imaging) and 134 (administration). The non-critical (low critical) areas may include a parking garage 136, a cafeteria 138 and a waiting room 139. Medium voltage systems are generally understood to include systems that control voltage between 480 and 15kV volts. In this example, the MV loop system 110 includes a main switchboard 140 coupled to two MV service entrances 141 and 142 and an emergency generator 144. The main switchboard 140 includes automatic transfer switches 146 that route power from the MV service entrances 141 and 142 and the emergency generator 144. Various MV substations 150, 152, 154 and 156 include transformers that provide low voltage to various low voltage systems. An MV reconfiguration monitoring and control station 158 allows control of the ATS system 146. The substations 150, 152, 154 and 156, the MV service entrances 141 and 142 and the emergency generator 144 form an MV loop 160.

A low voltage system is part of the EPSS 118 that ensures the supply of power to the high critical area system 114. The low voltage system draws power from the MV substations 150 and 152. A low voltage automatic transfer switch system 162 is coupled to the MV substations 150 and 152 as well as another emergency generator 164. The ATS system 162 routes power to a pair of redundant low voltage switchboards 166 and 168. The switchboards 166 and 168 in turn power a UPS 170. The UPS 170 and redundant switch board 168 are coupled to a low voltage ATS 172 that allows power either directly from the switchboard 168 or the UPS 170 to a high critical area such as the operating room 124.

The MV substation 154 provides power to a low voltage system that insures power to the medium critical system 115. The MV substation 154 is coupled to a low voltage ATS system 180 that is also coupled to another emergency generator 184. The low voltage ATS system 180 is in turn coupled to a low voltage switchboard 186 which provides power to medium critical areas 130, 132 and 134. The ATS system 180 allows switching to the generator 184 for power if the substation 154 is disabled. The MV substation 156 is coupled to a low voltage switchboard 190 that provides power to non-critical areas 136, 138 and 139.

The MV loop 160 is an optional component that assists in proper electrical distribution. The MV reconfiguration provides electrical distribution based on an open ring topology, which improves the performance of the MV loop system 110 in terms of reliability and reconfiguration time when an event such as the failure of a power substation occurs. The MV loop system 110 integrates a monitoring and control system in the control station 158. There may be any number of loops such as one, two or three different loops, each one fed from a delivery substation (from one or two utility incomers). The loops may include generators such as the generator 144 with step-up transformers, connected to one or various loops (for mutualization of resources). The generator 144 constitutes an alternate power source which is part of the emergency power system 118 and supplies power to at least certain loads in the hospital facility in the event of disruption of power from the utility entrance services 141 and 142. The automatic transfer switch system 146 selectively couples the main utility and alternate power sources such as the generator 144 to the electrical loads in the hospital facility. In case of failure of both utility entrances, the automatic transfer switch system 146 will first request the emergency generator 144 to start, and when available, will transfer the loads from the utility entrance services 141 or 142 to the emergency generator 144.

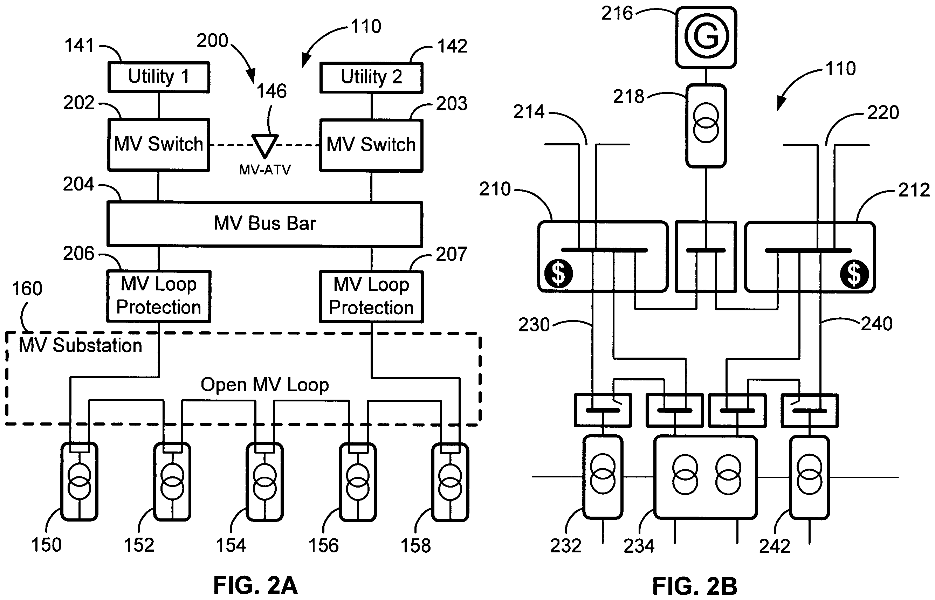

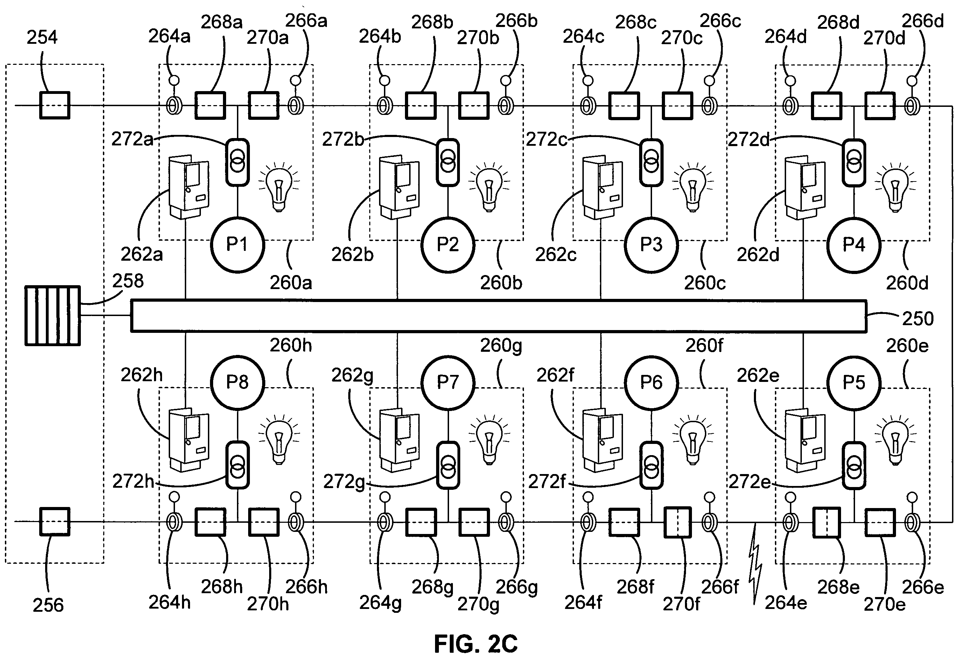

FIG. 2A is an example of the single MV loop 160 used for the MV loop system 110 in FIG. 1. Like element numbers for elements identical to those in FIG. 1 are used in FIG. 2. The single MV loop 200 includes the main switchboard 140 that draws power either from the MV service entrances 141 or 142 or the emergency generator 144. The MV ATS system 146 includes an MV switch 202 coupled to the MV service entrance 141 and an MV switch 203 coupled to the MV service entrance 142. The switches 202 and 203 are coupled to an MV bus bar 204 which electrically couples the different components of the MV loop 200. A pair of MV loop protection circuits 206 and 208 which may include circuit breakers are coupled between the substations 150, 152, 154 and 156. The MV loop protection circuits 206 and 208 protect the substations 150, 152, 154 and 156 from fault conditions such as short circuits and current overloads. The substations 150, 152, 154 and 156 are in the single MV loop 160.

FIG. 2B is an example of a multiple-loop configuration that may be used for the MV loop system 110. This configuration may be appropriate for a campus hospital where there are multiple buildings with multiple critical areas. FIG. 2B includes a first delivery substation 210 and a second utility delivery substation 212. The first delivery substation 210 includes inputs from a first MV service entrance 214 and an emergency generator 216 that is coupled to a step-up transformer 218. A second MV service entrance 220 is coupled to the second delivery substation 212 as well as the emergency generator 216. The first delivery substation 210 is part of an MV loop 230 that includes a transformer 232 and one of the transformers of a dual transformer 234. The second delivery substation 212 is part of a second MV loop 240 that includes another transformer 242 and the other transformer of the dual transformer 234. Rather than a dual transformer such as the transformer 234, separate transformers may be incorporated for each of the loops 230 and 240.

The MV loop system 110 is a critical part of the installation, since a fault at the medium voltage level may have severe consequences such as the complete shutdown of the low voltage area such as one of the critical areas in FIG. 1. For example, in Europe regulations define that medical locations require quick recovery in case of electrical failure (similar in North America or other geographic areas, but may be slightly different limits). For example, the highest level critical loads such as an operating room require recovery in less than 0.5 seconds and critical loads such as data centers require recovery in less than 15 seconds under certain European regulations.

The MV loop system 110 includes an automatic loop reconfiguration system which provides rerouting if one of the substations fails. FIG. 2C shows a block diagram of an example automatic loop reconfiguration system 250. Typically the automatic loop reconfiguration system 250 includes a one-loop reconfiguration 252 located at the incoming substation. The loop reconfiguration system 250 includes digital relay units 254 and 256 embedded into each loop feeder (such as a motorized cell) and a master controller 258. The reconfiguration system 250 includes a number of substations 260a-h. Each of the substations 260a-h includes a respective substation control unit 262a-h which may be a PLC or other type of controller. The substations 260a-h each include a pair of respective sensors 264a-h and 266a-h The substations 260a-h also include respective circuit breakers 268a-h and 270a-h which are coupled to a respective transformer 272a-h. The reconfiguration units may be linked to the power monitoring system which is part of the overall monitoring system 122 in FIG. 1 that monitors the electrical distribution system (typically in the form of a general single line diagram) of the hospital facility 102.

When a fault occurs on a medium voltage loop such as the MV loop 160 in FIG. 1 such as a failure of a substation 260a-h, the circuit-breakers 268a-h and 270a-h will assure protection and the reconfiguration system 250 will reconfigure the loop 252 to ensure power is still available for the system such as by switching to an emergency generator. The reconfiguration system 250 will isolate the failed substation by opening the switches, recluse the opened loop to re-energize the loop, and then close the tripped circuit breaker. As shown in FIG. 2C, a fault is detected by the sensor 266f on the substation 260f or the sensor 264e on the substation 260e. The sensed data indicates that a fault has occurred between the substations 260e and 260f. The master controller 258 will isolate the failed area by controlling the various circuit breakers such as the circuit breakers 270e and 268f. The reconfiguration system 250 will send a message to the monitoring system 122 and/or the remote services provider 104 in FIG. 1. For example, the response time for 22 sub-stations from opening the circuit breaker to when the loop is re-energized is less than 4 seconds. Of course if fewer substations are in the loop, the response time is shortened.

The ECPR units which are part of the ECPR system 112 provide (1) real-time diagnostics and predictive maintenance at both device and network levels, and (2) crisis management that includes power restoration assistance and safety accessories such as short-circuit testing and wireless re-closing of protective devices.

Electrical distribution systems are designed and installed with the circuit breakers aligned and selectively coordinated. Over time, settings can be modified during tests or system expansions, and the integrity of the protection plan can be compromised. The real-time diagnostics provided by the ECPR allow the tracing of changes in the protection plan and ensure that the breaker coordination remains correctly set for the safety of both personnel and assets, and maximum uptime. The ECPR 112 alerts staff if changes to circuit breaker set points affect the protection plan integrity and enables the staff to easily follow and check the load and temperature profile of the breakers. This system helps to prevent failures that require switching to emergency conditions and backup power. If a failure does occur, the system helps to identify the true source of electrical problems and to return to normal operations safely and quickly.

The crisis management ensures safe and quick restoration of outages, and protection of maintenance personnel from arc flashes. Specifically, the crisis management provides contextual information about an electrical trip, assistance in identifying the cause of the fault and then returning to normal operations seamlessly and efficiently with reassurance through a safe, wireless way to close the tripped breaker.

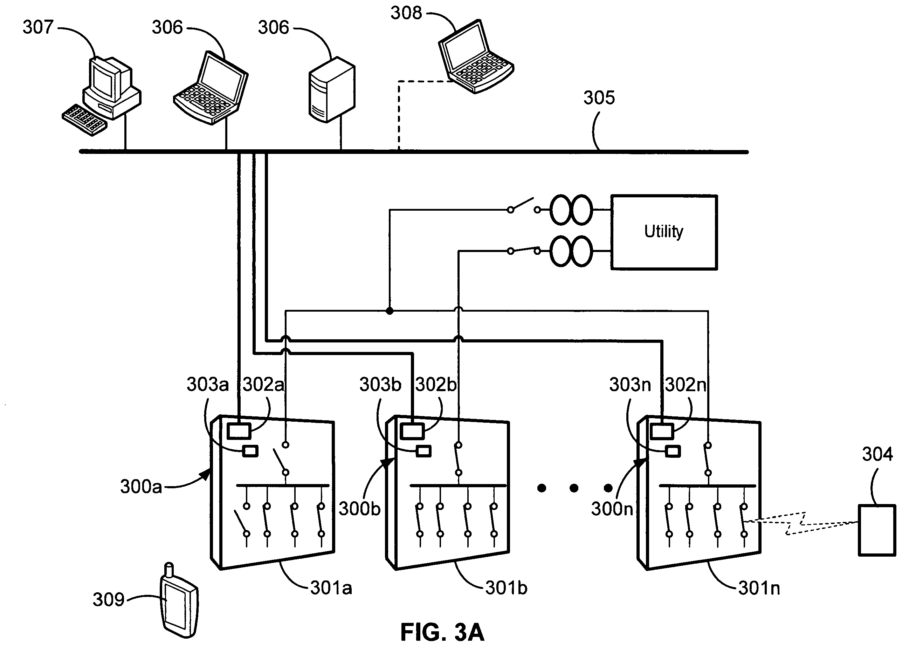

As depicted in FIG. 3A, ECPR units 300a, 300b ... 300n are provided on each of multiple low-voltage switchboards 301a, 301b ... 301n. Each ECPR unit includes a controller 302, a short circuit tester 303 and a wireless breaker closing control 304 for all the circuit breakers associated with that ECPR's switchboard 301.

The controller 302 in each ECPR unit 300 is coupled to its associated short circuit tester 303 and all the circuit breakers (indicated by the switch symbols in FIG. 3A) associated with its switchboard 301. In addition, each controller 302 is coupled to an Ethernet 305 that couples each controller 302 to all the other controllers in the other ECPR's and to the higher level monitoring system and software to provide coordination information and a predictive maintenance or service call-out response. The basic purposes of the controllers 302 are (1) crisis management by providing assistance in case of trips (e.g., providing trip context analysis, assistance for fault clearance, and guided power restoration), and (2) to help anticipate problems by executing a permanent selectivity analysis on changed settings, and real-time diagnosis of the breakers and network, using aging algorithms and wear parameter monitoring, based on environmental conditions, real-time load assessment, and historical conditions such as number of trips/operating and energy discharge. Predefined alarms are used to track conditions and generate alarms or notices when network abnormalities are detected.

Each controller 302 can communicate with communicating circuit breakers and metering devices using a protocol such as Modbus that is common to all the devices. One example of a communicating breaker is the "Masterpact" circuit breaker made by Schneider Electric. The controllers 302 can be accessed via the Ethernet 305 through a web browser 306 or directly from a supervisor station 307 or a remote management service 308, and can also act as gateways for upstream systems such as power monitoring systems or remote energy monitoring and product services. Communicating breakers can be closed remotely by signals sent to the controllers 302 from a remote computer via the Ethernet 305, or wirelessly from a smart phone 309.

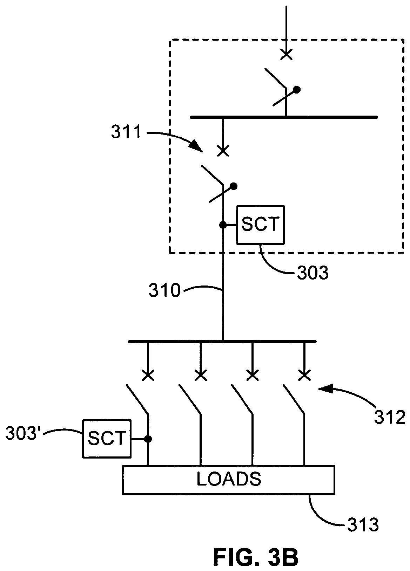

As depicted in FIG. 3B, the short circuit tester 303 associated with each switchboard 301 is coupled to each of the circuit breakers associated with that switchboard to check for the presence of short circuits on the cables between the feeder and the load or a downstream switchboard. For example, the short circuit tester 303 in FIG. 3B is connected to the power line 310 between the tripped breaker 311 and the downstream breakers 312 and loads 312. This allows an operator to verify, by simply pushing a button on the tester 303, that no short circuit exists (e.g., that the fault that caused the trip has been cleared) downstream of the tripped breaker 311 before reclosing that breaker. Similarly, the short circuit tester 303' is connected to the power lines connecting breakers 312 to the downstream loads 313 to test for short circuits downstream of the breakers 312. For example, different colored indicator lights on the testers 303 and 303' can indicate whether it is safe to re-close a tripped breaker, or a fault still exists. Indicators may also be provided to indicate when a test is not possible because of voltage presence (if test is performed on a breaker under voltage), or an internal device fault exists.

The wireless breaker closing control 304 associated with each switchboard 301 is a remote control device that allows a user to re-close any breaker that contains a communicating coil, while the user is a safe distance away from the breaker. There is preferably a separate remote control for each communicating breaker, to ensure that the correct remote control unit is used to re-close the desired breaker, so that the wrong breaker will not be closed by accident.

The remote control unit 304 preferably uses Zigbee technology that keeps the power consumption so low that a single battery can be used for the entire life of the unit, or energy harvesting may be used to entirely eliminate the need for a battery. Signals generated by the handset 304 are received by a communications card coupled to the controller 302, which in turn communicates with a communication card in each circuit breaker. Such communication cards are standard options in many circuit breakers, such as the Masterpact circuit breakers available from Schneider Electric. The signals produced by each handset are unique, so that the controllers 302 can determine which circuit breaker is to be controlled in response to signals received from the different handsets for the multiple breakers in any given switchboard.

Each handset 304 includes a magnet so that it can be easily attached to the switchboard housing adjacent the circuit breaker that the handset controls. The handsets and their mounting locations on the switchboard enclosure are preferably color coded to assist in keeping multiple handsets physically associated with the respective circuit breakers that the handsets control.

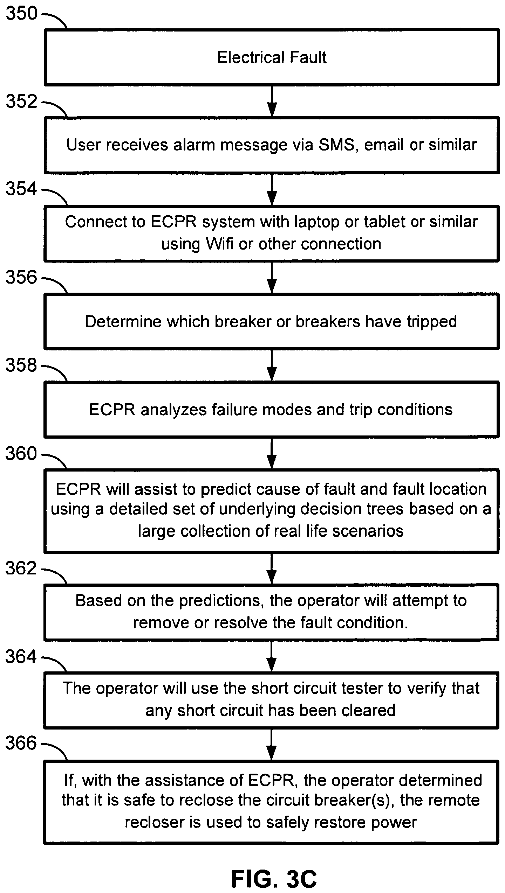

FIG. 3C depicts a process executed by the ECPR units 300 to respond to detected faults. When a fault is detected at step 350, an alarm message is generated and is received by the user(s), such as the facility manager, via SMS, email, etc. at step 352. The user then connects to the ECPR system with a laptop, tablet or other device using a connection such as Wifi at step 354. The ECPR controller determines which breaker(s) has tripped at step 356, and analyzes the failure modes and trip conditions at step 358. At step 360 the ECPR controller predicts the likely cause and location of the fault, using a set of decision trees based on a collection of scenarios of actual trips. Based on these predictions, an operator attempts to remove or resolve the fault condition at step 362, and then actuates the short circuit tester at step 364 to verify that any short circuit has been cleared. If the operator determines, with the assistance of the ECPR, that it is safe to reclose the tripped circuit breaker(s), the wireless recloser unit(s) is used at step 366 to restore power by reclosing the tripped breaker(s).

Returning to FIG. 1, the critical area system 114 provides isolated power to a critical area such as the operating room 124 via an integrated isolation transformer (not shown in FIG. 1). The integrated isolation transformer protects both patients and staff in the operating room 124, which is typically considered a wet floor environment, from electrical shock. The critical area system 114 monitors the line insulation using a line insulation monitor (LIM) and provides an alarm in case of an insulation fault. The critical area system 114 also monitors environmental parameters, such as temperature, pressure and humidity, to minimize the risk of infection. The critical area system 114 also provides medical gases related information.

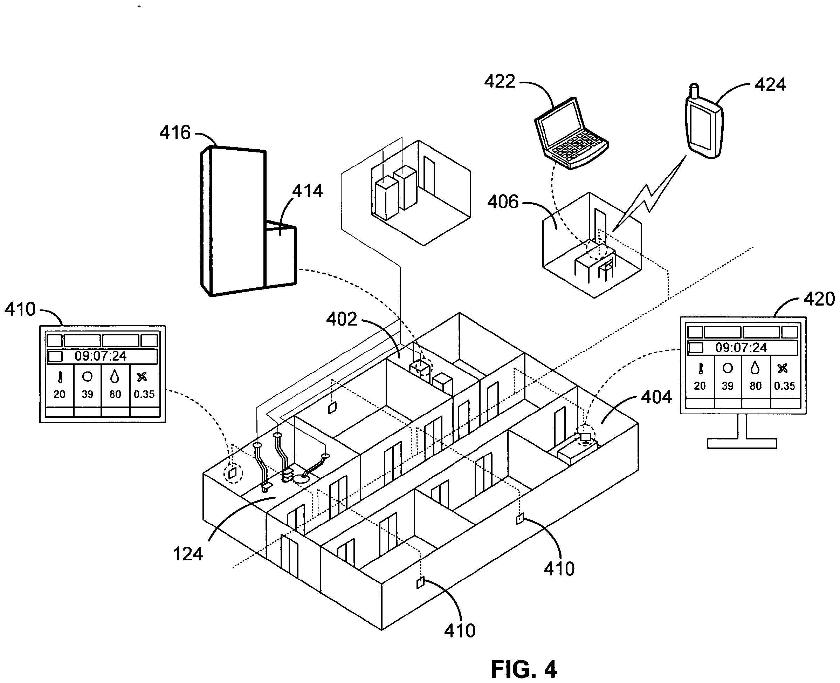

The critical area system 114 is shown in FIG. 4, which is a perspective view of an example operating room area 400 including the operating room 124 in FIG. 1, an electrical equipment room 402, a supervisor staff office 404 and a remote office 406. The operating room area 400 includes a plurality of touchscreen panels 410. The above parameters are presented to the staff in the operating room area 400 via the touchscreen panels 410 in order to assure optimum power availability. This system may be applied to critical areas such as operating rooms, intensive care units, or recovery units.

The critical area system 114 include the touchscreen panels 410, a monitoring control system 412, a controller 414 and an electric switchboard 416. Alternatively, the controller 414 may be an input/output controller module such as a PLC. These components combined together ensure continuity of electric power supply vital for critical areas such as the operating room area 400. Working together the components of the critical area system 114 provide local information and room control to the operating room staff while alerting maintenance staff of hazardous conditions that require attention and allow for event recording. The critical area system 114 may be integrated with a central power monitoring system or building management systems which are part of the monitoring system 122 for the hospital facility 102 in FIG. 1.

These components are physically spread throughout the hospital facility 102 such as shown in the operating room area 400 in FIG. 4. For example, the monitoring system 412 is located in the remote office 406. However, the monitoring system 412 may be located anywhere such as remote from the facility, a local maintenance office, or a supervisor workstation 420 located in the supervisor staff office 404, etc. The monitoring system 412 is the main connection point between the operating room area 400 and a higher level monitoring system such as the monitoring system 122 in FIG. 1. The monitoring system 412 has different screens which may be displayed on the workstation 420 or other displays, one of which allows Nursing Supervisors to manage their floors by offering a display of each operating room status, ability to generate events reports, and ability to set alarm thresholds for temperature and pressure in the operating rooms. In another screen it allows maintenance staff to be automatically advised of any fault, has remote access to web pages for fault identification, location and diagnosis. These screens may be displayed by maintenance staff on a maintenance computer 422 or a handheld device 424.

The operating room touchscreen panel 410 is located in the operating room 124 and displays real time environmental, medical and electrical data to the surgeon or nurse. The main purpose of this is to inform the medical team of an electrical fault or insulation fault in the electrical installation or any connected equipment in the operating room 124, and to be notified if maintenance is required or is underway.

The controllers 414 and electrical switchboard 416 are tied to electrical distribution infrastructure in the hospital facility. In this example, the controllers 414 and the electrical switchboard 416 are located in a hallway just outside the operating theatre or in the close by electrical equipment room 402.

In practice the components work to improve reliability and decrease downtime as follows when an electrical fault occurs. When a fault occurs it is detected by this system. The fault is immediately displayed on the local touchscreen panel 410 in the operating room 124 and dispatched to the workstation 420 in the supervisory office 404. The fault is also sent at the same time to maintenance personnel (either local facility maintenance, remote services such as the remote service provider 104 in FIG. 1, or both) via the maintenance computer 422 and/or handheld device 424. The alarm is sent to either remote services or the local facility management via an alarm manager. For example, the remote alarm manager sends a message (via SMS) to a facility maintenance staff via a handheld device 424 such as a mobile phone by the way of a GSM modem.

Maintenance may remotely first acknowledge the alarm which is displayed on the touchscreen panels 410 or the workstation 422 or handheld device 424, and help resolve the issue thereby shortening the result time. A remote repair may be possible because the information that is given in the maintenance call may be viewed in a maintenance mode screen which may be remotely accessed from any computer or Internet capable device such as the workstation 422 or handheld device 424, either by onsite facility maintenance personnel, or by the remote services provider 104. In this example, the maintenance mode screen of the system 114 is protected by such security as username/password, and other security protocols. The maintenance mode screen provides details on the fault to make an immediate decision on the repair without needing to close the operating room area 400 to troubleshoot the problem. The problem such as a fault location may be seen through a virtual electrical infrastructure viewer screen which allows the maintenance personnel to locate the section of the installation which is in fault, and allow the maintenance staff work on the fix. The medical staff may be advised that a technician is repairing the issue via the touchscreen panel 410. The chief nurse's system and other monitors such as the touchscreen panels 410 may track all events into the data logging for further follow up and analysis. Other parameters such as temperature, humidity, pressure, medical gases and electrical errors or exceptions are also displayed and logged.

The remote access by maintenance staff via the monitoring system 412 allows for the fast response time to a fault to reduce downtime. Connecting the monitoring system 412 to the facility Building Management System (BMS) or other facility systems in the main monitoring system 122 in FIG. 1 allows for integration into the current workflow. For example the technicians or remote services may be automatically advised by SMS or other communication mediums of a current fault by the remote alarm management software connected to the hospital BMS or other monitoring software.

By accessing to the alarms report module, the remote services and/or local maintenance staff may be informed immediately of the issue, and the operator can acknowledge the alarm from his workstation 422. This is useful because it ensures the medical staff automatically receives the information that the issue is under process to be solved. It also allows the facility staff to begin working on the problem without needing to stop or close the operating room 124 or other critical areas.

For non-critical areas of hospitals such as the non-critical areas 136, 138 and 139 in FIG. 1, there are multiple needs for electrical power from critical to non-critical. Understanding the usage and preventing overloading on critical circuits during an event such as a power failure is vital for the reliability of the system. Having the ability to monitor and control specific loads in a hospital facility enables improved stability and quicker response to catastrophic failure.

Most hospital patient rooms (wards) have multiple power outlets, usually designated by color according to the criticality of the load to be connected. Often, users (nurses and patients) do not realize the consequences of connecting a non-critical piece of equipment to a critical outlet. In the case of a loss of utility power, non-critical loads may be shed to make sure that enough emergency power is available for critical loads. If, however, a significant number of non-critical devices are plugged into critical power outlets, those loads cannot be shed when the hospital has to rely on emergency generation.

The ability to closely monitor the loads connected to the critical outlets via the monitoring software ensures that the emergency power availability threshold is not surpassed. As with the critical area system 114, remote access to information on faults by maintenance staff via the monitoring system allows for the fast response time to a fault to reduce downtime. Similarly, having the monitoring system connected to the facility building management system (BMS) allows for easy integration into their current workflow. Predictive action taken on identifying non-critical devices which are plugged into critical power outlets, and thus the ward being unable to be properly energized during emergency generation contribute towards the reliability and availability of needed power to keep working in all circumstances.

The EPSS testing and validation system 120 in FIG. 1 is described in detail in U.S. patent application Serial No. 12/917,537 entitled "Automated Emergency Power Supply Test Using Engine Exhaust Temperature." The automated Emergency Power Supply System (EPSS) test system 120 monitors and provides secondary control of an EPSS testing scheme. It records waveforms of critical equipment and generates reports compliant with the relevant regulations (NFPA 99 and 110) that are emailed to facility managers, remote services and may also provide simplified reporting for other key stakeholders, such as a facility or building CEOs. The EPSS test system 120 has monitoring and control capability that will initiate EPSS testing and monitor switching time and characteristics of the system to ensure that the reliability and responsiveness of the system has not been compromised. It provides alerts on system issues that will drive maintenance action and ensure that the system is 100% functional during a real event.

The EPSS test system 120 increases system reliability by having the hardware and software to automatically electronically measure and monitor the EPSS 118 during all times without being intrusive based on actual data and for the most part without any requirement for personnel to do manual recording of the test data.

The EPSS 118 in FIG. 1 includes one or more alternate power sources such as the emergency generator 144, automatic transfer switches and protective circuit breakers. The one or more alternate power sources may supply the facility with power during an interruption of the main utility supplied power. Typically, alternate power sources are made up of one or more diesel or gas powered generators, sized to carry, at a minimum, any vital, critical and emergency loads. After the main utility supply is interrupted, power is transferred from the main utility supply to the alternate power sources using the automatic transfer switches.

All three main components are coupled with monitoring equipment (e.g., ION 7550/7650 based power meters available from Schneider Electric), which in turn are coupled to the monitoring software. When a facility such as the hospital facility 102 in FIG. 1 experiences an event such as losing the primary power source goes down for the facility, the automatic transfer switch on the main switchboard 140 enables the generator 144 to start and the switchover to the generator when the ATS is engaged.

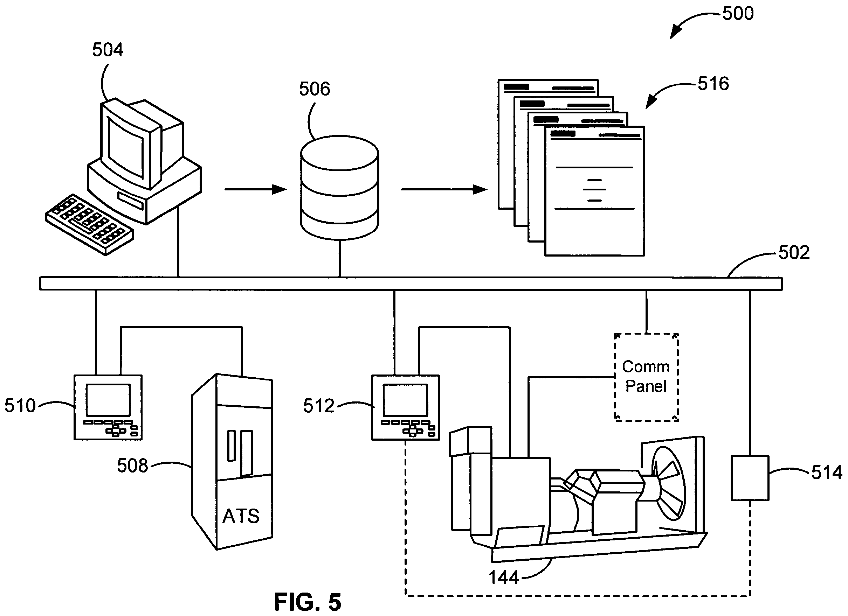

FIG. 5 is a functional block diagram showing an example configuration and components of a simplified automated emergency power supply system (EPSS) test configuration 500 which may be part or all of the EPSS test system 120 in FIG. 1. The EPSS test configuration 500 includes a communications network 502, such as an Ethernet network, connected to a computing device 504, such as a computer or a server, a database 506, and an automatic transfer switch (ATS) 508. A status (e.g., "Test," "Normal," and "Emergency") of the ATS 508 is monitored by a first monitoring device or programmable logic controller (PLC) 510, and a second power monitoring device 512 measures a characteristic of power, such as current or voltage, generated by the generator 144 and transforms the measured current or voltage into corresponding electrical parameter data (e.g., power) for communication over the communications network 502. The status information of the ATS 508 can also include power source information indicating that normal power is available from the main utility power source 142 or that emergency or alternate power is available from the alternate power source such as the generator 144. When this additional status information is reported to the first monitoring device 510, the EPSS test system 120 can be used to log electrical and engine parameter data generated during actual power outages from the normal power source such as the MV service entrance 142 in addition to electrical and engine parameter data generated during a test of the EPS system 118. Power monitors may also be coupled to different portions of the electrical distribution network.

An optional temperature sensor 514 measures the exhaust temperature of the engine of the generator 144 and communicates exhaust temperature data indicative of the exhaust temperature of the engine. The temperature sensor 514 can communicate the exhaust temperature data directly to the computing device 504 over the communications network 502 or indirectly via the second power monitoring device 512. Any combination of the electrical parameter data from the second power monitoring device 512, the exhaust temperature data from the second power monitoring device 512 or directly from the sensor 514, and the status information from the first monitoring device 510 can be stored in the database 506, which is accessed by the computing device 504 for evaluating a result of a test of the EPSS 118 based on any combination of the exhaust temperature data, the electrical parameter data, and the status information.

The second power monitoring device 512 may be any monitoring device such as an ION7550 or ION7650 power monitor available from Schneider Electric. The second power monitoring device 512 monitors electrical parameters (e.g., current, voltage, frequency) of the generator 144 via analog inputs as well as three status contacts of the generator 144, which monitor the operational status of the generator 144 (e.g., "start," "running," and "stopped"), via digital inputs. A change in the operational status of any of the three contacts is stored in a memory of the second power monitoring device 512 along with a timestamp of the status change. The timestamp can include the time and date that the operational status of the generator 144 changed. In addition, one or more engine parameters of the generator 144, such as any combination of a battery voltage of a battery in the generator 144, the exhaust temperature of the engine of the generator 144, a coolant temperature or pressure of the engine of the generator 144, or a differential fuel pressure across a fuel filter of the engine of the generator 144, etc. can be received at the analog inputs of the second power monitoring device 512 and stored in a memory of the second power monitoring device 512. Or, in examples in which the controller of the engine in the generator 144 communicates via the MODBUS^{®} messaging protocol, the power monitor 512 can retrieve these engine parameters directly from the engine controller.

The computing device 504 evaluates the test result based on any combination of the engine parameter data and the electrical parameter data and generates one or more reports 516, which can be displayed on a video display or printed on a printer. The first monitoring device 510 captures the "Test," "Normal" and "Emergency" status information transmitted by that ATS 508. All three status contacts are tied to the digital inputs of the first monitoring device 510, which again can be a PLC. As described above, the status information from the ATS 508 can further include contacts that indicate "utility power available" or "emergency power available." These additional contacts allow the user of the computing device 504 to generate EPSS reports 516 responsive to an actual utility outage in addition to responsive to an EPSS test.

The status information, engine parameter data, and the electrical parameter data are automatically uploaded by the monitoring devices in the reliability system 100 via the communications network 502 to the database 506, which can be an SQL server database, such as an ION Enterprise SQL Server database available from Schneider Electric. A reporting module of the EPSS 500 retrieves the data from the database 506 to produce EPSS test reports 516. The reporting module is a machine-executable component that runs on the computing device 504.

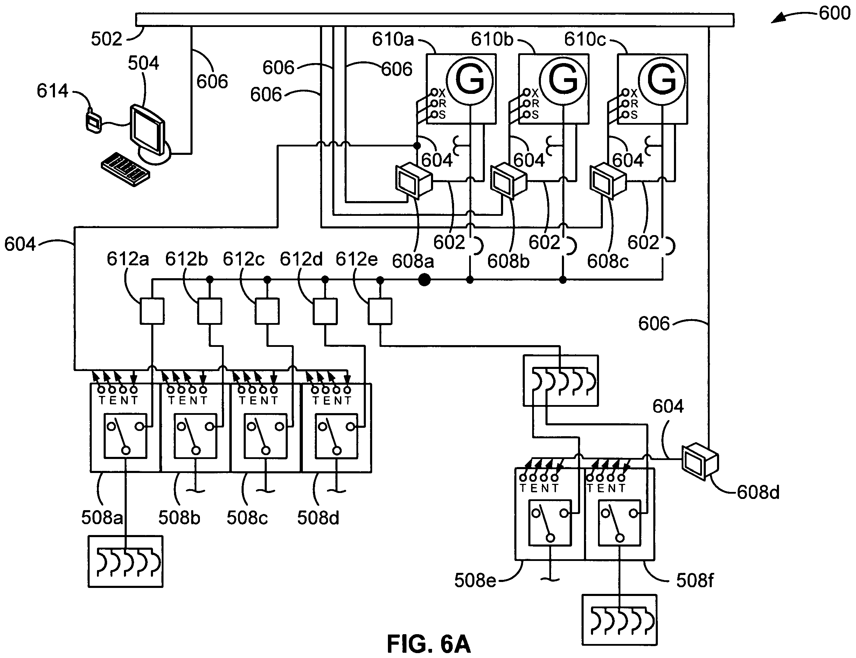

The functional block diagram shown in FIG. 5 illustrates the basic components involved in the EPSS 500, and of course there are numerous ways an EPS system can be configured for conducting automated tests as disclosed herein. FIG. 6A shows an essential or basic configuration.

In FIG. 6A, an essential or basic EPSS configuration 600 is shown, which is based on the EPSS 500 shown in FIG. 5. The lines numbered 602 communicate over a MODBUS^{®} serial communications protocol, the lines numbered 604 correspond to digital I/O lines, and the lines numbered 606 communicate using the Ethernet communications protocol. The essential EPSS configuration 600 includes the communications network 502 and the computing device 504 shown in FIG. 6A. In this example, the communications network 502 is an Ethernet network that is coupled to the computing device 504 and to first, second, third, and fourth monitoring devices or programmable logic control devices 608a,b,c,d. Any of the monitoring devices 608 disclosed herein can also correspond to the monitoring devices 510, 512 shown in FIG. 5, and vice versa. The first, second, and third monitoring devices 608a-c communicate engine parameter data associated with first, second, and third alternate power sources 610a-c by a serial communications protocol, such as MODBUS^{®}, to the respective alternate power sources 610a,b,c such as diesel generators. Each generator 610a,b,c includes at least three digital outputs (labeled X indicating an engine starting status, R indicating an engine running status, and S indicating an engine stopped status) that supply the respective operational status of the engine to the corresponding monitoring device 610a,b,c. The fourth monitoring device 608d monitors the status of one or more ATS switches 508e,f, each having three digital outputs indicating the status of the ATS switch as test (labeled "T"), emergency (labeled "E"), or normal (labeled "N"). Four local ATS switches 508a-d are connected to respective overcurrent devices (OCD) with a switching mechanism such as a MASTERPACT^{®} power circuit breaker available from Schneider Electric. The digital outputs of the ATS switches 508a-d indicating status information of each of the ATS switches are received at corresponding digital inputs of the first monitoring or PLC device 608a. Each of the ATS switches 508a-f includes a control digital input, and each of the monitoring devices 608a-608d includes a corresponding control digital output (labeled "T" in FIG. 6A), for instructing by the monitoring devices 608a-608d each of the corresponding ATS switches 508a,b,c,d,e,fto change its status to a test status for conducting a test of the EPS system 118.

For example, the monitoring devices 608a-c can be ION7550 power monitors available from Schneider Electric, which record and store electrical parameter data, including power quality data, from each of the corresponding generators 610a-c, status information regarding each of the ATS switches 508a-d, and can be powered by batteries or a uninterruptible power supply (UPS) during an outage of power from the main utility power source 142. The monitoring device 608d can also be an ION7550 power monitor available from Schneider Electric, and monitors ATS switches 508e,f that are remote from the ATS switches 508a-d. The computing device 504 can be communicatively coupled to a paging device 614 for communicating alarms or other information during testing of the EPSS 118.

The automated EPSS configuration 600 shown in FIG. 6A has basic functionality in which power monitoring is implemented only at the generators 610a,b,c. All ATS switches 508a-f have status information only (test, emergency, normal) monitoring. This basic configuration can be suitable for cost-sensitive projects.

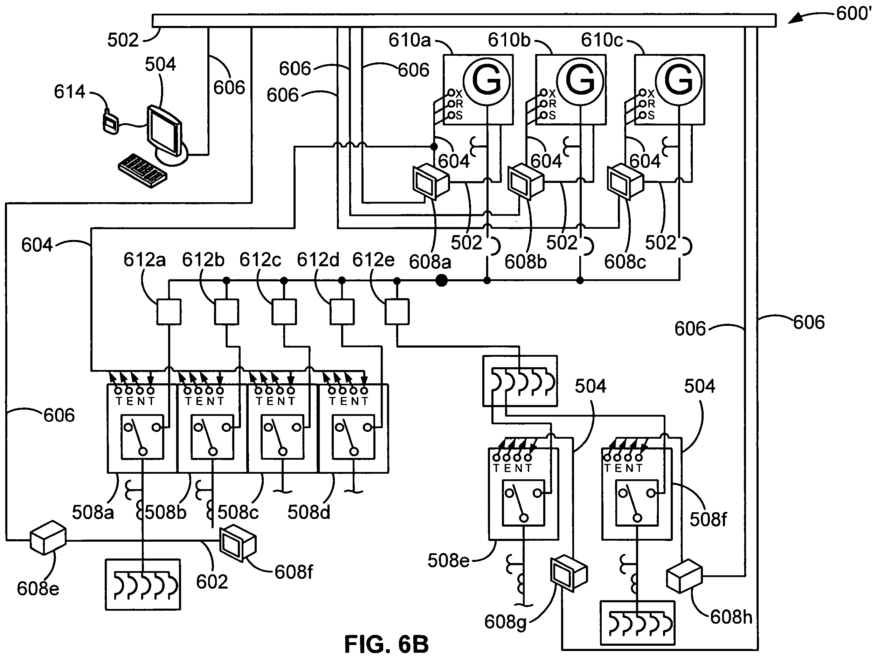

For configurations in which power metering is required at the ATS level as well as at the generator level, the exemplary enhanced configuration 600' configuration shown in FIG. 6B can be used. In this example configuration 600', ATS status information can also be tied into the respective ATS metering, or any nearby power monitoring device with digital inputs. Like components are shown with like reference numbers. In FIG. 6B, additional monitoring devices 608e,f,g,h are installed to provide electrical parameter data from the ATS switches 508a-f. The monitoring devices 608e-h can capture and store peak demand values and other information as specified in Section 220.87 of the National Electrical Code (NEC). In this enhanced EPSS configuration 600', the monitoring devices 608f and 608g may be PM8-based power monitors available from Schneider Electric. The computing device 504 can initiate a test of the EPSS system 118 and can also provide status information associated with the overcurrent devices 612a-e.

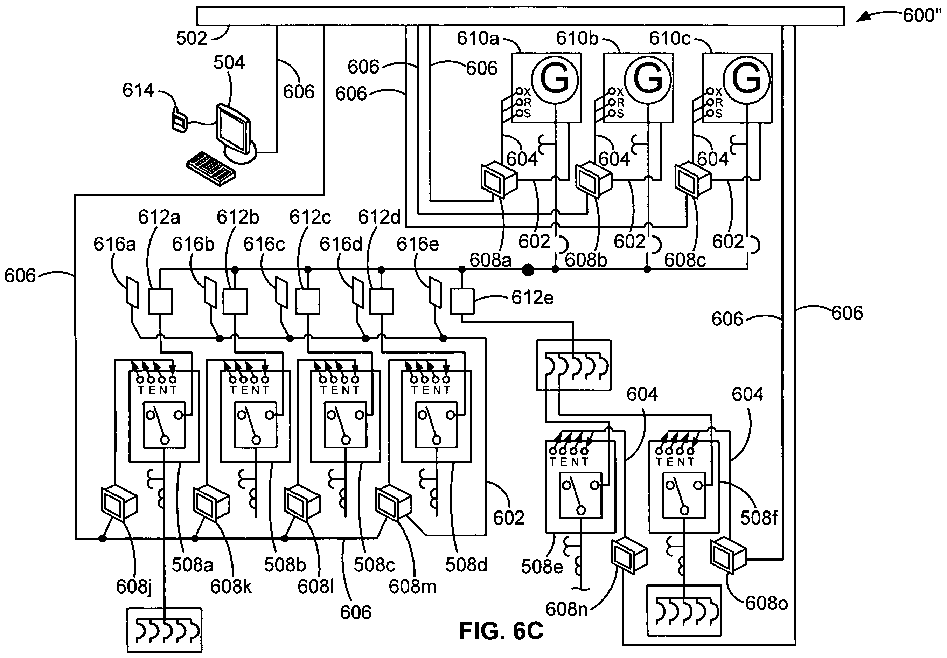

Finally, for EPSS configurations in which power quality is important for critical machinery or equipment such as MRI machines, it is desirable to equip selective ATS switches with enhanced power quality metering. FIG. 6C illustrates an example comprehensive EPSS configuration 600" in which the generators 610a-c are equipped with power quality metering. The configuration 600" is similar to the configuration 600' in FIG. 6B except that the overcurrent devices (OCD) 612a-e include a communications interface 616a-e, and each ATS 508a-f is monitored by a corresponding monitoring device 608j-o. The communications interface 616a-e communicates electrical parameter data (such as power quality data, peak demand data, and other maximum demand data) and ATS status information (such as test, emergency, and normal) via a serial communications protocol 602 to the computing device 504 via the monitoring device 608m over Ethernet 502. Each monitoring device 608j-o can optionally include an additional input from each of the ATS switches 508a-f indicating a status of normal power available contacts and emergency power available contacts, which indicate the source of power (e.g., normal 142 or alternate 144) delivered through the ATS 508. As indicated above, each of the monitoring devices 608a-c that monitor the respective generators 610a-c monitors whether the generators 610a-c can support a minimum required load level (e.g., 30% in the United States) for a minimum period of time (e.g., 30 minutes). The monitoring devices 608a-c begin recording when the exhaust temperature being monitored by the monitoring devices 608a-c reaches the stack temperature.

The basic, enhanced, and comprehensive configuration examples shown in FIGS. 6A-6C can be used in conjunction with any EPSS testing solution disclosed herein. Of course, these configurations can be scaled to any size to suit a particular application, and fewer or more devices can be used than those shown. The EPSS 500 shown in FIG. 5 is a basic EPSS, which can be expanded to any configuration, such as the configurations 600, 600', and 600" shown in FIGS. 6A-6C. As used herein, the configurations 600, 600', 600" may also be variously referred to as an EPSS.

The EPSS test system 120 interacts with the other systems in FIG. 1 with its monitoring and control features aspect, transferring the actual measurement data to the reporting service or facility manager's internal alarming system and building systems 122. The EPSS test system 120 monitoring and/or metering of the generator 144 provides details on the genset load and logging and time stamping of genset status, the logging of engine parameters, exhaust heat, and waveform capture during startup and transfer of loads. The EPSS test system 120 monitors the ATS and provides details of the ATS load in addition to logging and time stamping of transfer switch position, which is useful for capacity planning/monitoring. In addition, waveform capture of transfers may be performed to verify that transfer switching is not causing unusual voltage disturbances. The status of the ATS is also monitored to provide the user with real-time monitoring and logging of transfer switch position with time and date stamp and millisecond accuracy, giving, for example, the user information on the status (ATS in normal position, ATS in emergency position) and control over the type of mode of the ATS (test mode or normal mode).

The EPSS power monitoring system 120 also may provide circuit breaker status information. The automated EPSS test monitoring system 120 may also initiate an EPSS test from the monitoring and control software. This is done by remotely putting an ATS into test mode from the monitoring and control software via a digital output on a power monitoring device or RTU.

The non-intrusive testing and monitoring of the EPSS 118 via the monitoring software integrates the EPSS test system 120 with the reliability system 100 in FIG. 1. Testing the EPSS 118 on a regular basis within proper operating parameters is important because the system tests point out problem areas which need to be addressed to increase the system's overall mean time between failures (MTBF). Some or all of the power monitors may include a communication port for communicating with a remote management facility such as the third party service provider 104 via the communications network as part of the monitoring system 122.

The reliability system 100 in FIG. 1 is based on the connection and automation of the above described components which may perform various services. Information regarding the delivery of power from the main utility source such as the MV service entrance 142 is sent over a communications network that may be part of the monitoring system 122. In the case of a trip condition that may interrupt the delivery of power to a load in a critical area such as the operating room, this information includes the occurrence of trip conditions. Other information may include re-closings of circuit breakers and changes in the settings of circuit breakers. An alarm is transmitted over the communications network when a trip condition occurs so that action can be taken to resume the delivery of power to loads to which power delivery has been interrupted. The alarm is transmitted to at least communication stations associated with the critical loads such as the touchscreen panels 410, workstation 420 and maintenance computer 422 in FIG. 4. An automatic transfer switch is automatically instructed to couple an alternate power source such as the generator 144 to the loads to which power delivery has been interrupted, if the delivery of power to such loads is not restored within a preset time period. The reliability system 100 also stores and periodically evaluates information regarding the occurrences of trip conditions and uses of said alternate power source by load, and transmits an alert over the communications network to relevant parties such as the facility management or the third party service provide 104 an alert when the evaluation identifies a performance change for any load.

The facility manager is able to make intelligent decisions that will help prevent electrical distribution failures or in the unlikely event of a failure based on use of the reliability system 100. The facility manager is also able to re-energize the power system in the most expedient and safest manner possible.

The services offered by the system 100 allows for maintenance and operation of the electrical distribution infrastructure in a facility such as the hospital facility 102 in FIG. 1 to be outsourced an external remote services provider 104 which operates as the remote facilities manager. By enabling external facility management companies, the complete electrical distribution network may be managed remotely and the hospital facility is provided with information that help them make informed decisions on their operations.

These services may include: 1) remote facility management; 2) drive predictive maintenance; 3) preventative and curtailment maintenance; and 4) eServices. Remote facility management services may extract data from a facility via the communications network of the monitoring system 122 and use this information to remotely manage the facility. The data may include current flow, trips, breaker status, life cycle info, pickup thermal elements, various genset engine parameters, load, etc. Generally there are four types of actions that may be offered by remote facility management services. The actions may be in response to an alert or a message to initiate maintenance action in response to preset changes detected by the monitoring system 122 information regarding selected characteristics of the electrical distribution system and a critical load in critical areas. The reliability system 100 may enable third party maintenance services for just in time services. The reliability system 100 may dispatch a third party service provider for an immediate emergency fix to provide immediate services or maintenance on a device or to address an alert that can come in from any part of the facility. The reliability system 100 may assist in walking an unskilled person through steps to fix a problem and get the system back online. The reliability system may also tag the problem to be addressed via a maintenance schedule and re-energize the system remotely. This is beneficial for the user as it increases reliability of the system and its components because the user now knows even though an alert has been triggered for a device or part (i.e., breaker tripped) the part won't fail under standard maintenance schedule, and thus the user can reduce cost by delaying non-critical maintenance.

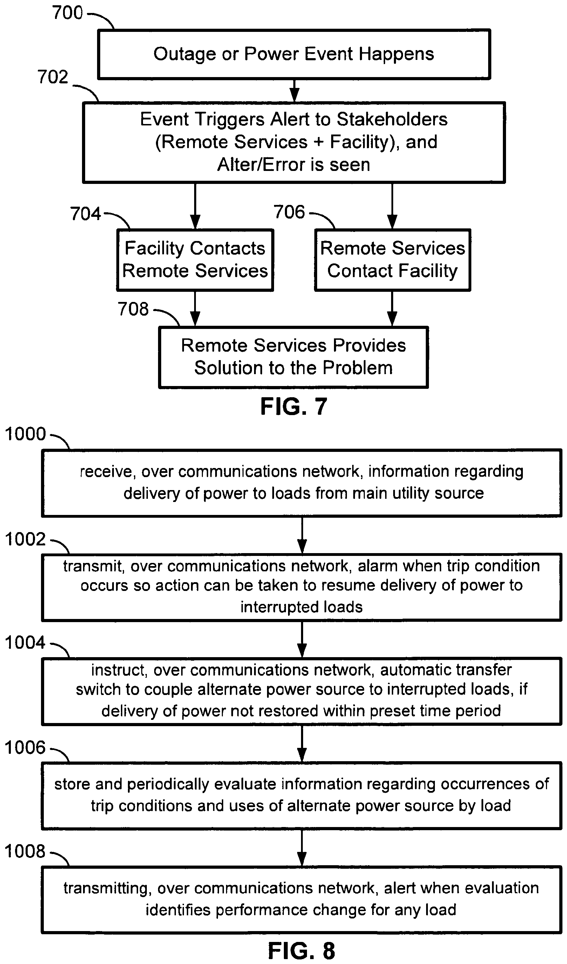

FIG. 7 is an example of the workflow that occurs to deploy the reliability system 100. An outage or power event occurs on a power system in a facility such as the hospital facility 102 (700). The event triggers an alert to the relevant stakeholders via the connected monitoring devices (702). For example there could be a breaker trip which is an emergency because the hospital is without power in a portion of the facility. The ECPR system 112 takes all the relevant information on the outage and sends the information to remote services or internal facility maintenance (704). Because the remote services has an overview of the entire facility system and its components, the remote services may receive and understand the issue, understand the component problem, background on parts, wear on components, etc in the context of the entire power system and make an informed recommendation on how to best reset or reenergize the power system. The facility manager then contacts remote services (or vice versa) (706). Communications may be via email, phone, etc, and is pushed out to the relevant people and key stakeholders with issues to help them work through the problem, or provides them with the advice to defer the problem to another maintenance schedule. The "Stakeholders" are highly variable and could include people as high as the facility manager or even the CEO, but also the front line workers who would be available based on their maintenance shifts for who is in charge, etc. From the information provided to remote services (via the ECPR system 112), they can now work with a relatively unskilled maintenance person to fix the breaker & reclose, or remotely reclose it if there is no error (708). If they see where the error/alert is in the system, they can schedule and prioritize a fix as necessary.

Solutions and problems may be prioritized in the reliability system 100. For example, main breakers may be tagged higher priority than secondary breakers. The specific priority information is fed from the ECPR system 112. The entire power monitoring system overview provides the context to make a relevant maintenance decision that is both efficient in terms of time and cost.

Drive predictive maintenance services includes providing predictive maintenance based on the information from the reliability system 100 (specifically from EPSS test system 120 and the ECPR system 112) and the data from the manufacturer. In this facility management service, the remote services provider match the manufacturer's limits on the devices with the actual events, and provides a recommendation on the most efficient way to fix the system with the shortest downtime. These services use actual maintenance data to create a realistic model based on actual conditions as opposed to theoretical calculations. The real-life predictive portion is generated by obtaining data from the EPSS test system 120 and the ECPR system 112 and feeding it to the services model.

For example, breakers require maintenance to operate, but too much maintenance can also be an issue. If the breakers are never operated, this creates a reliability concern because they need to be cycled to lubricate the mechanical components. However, if the breakers are continually operated due to continual testing, this is also a reliability concern, because the frequency of operation may result in having to replace the breaker. In this service, the system 100 uses data collected by the ECPR system 112 (operation minimal and maximum numbers against the manufacturer's recommendations) so when an actual trip happens it has the history to help make the decision on whether or not the breaker requires an emergency replacement or it can be reclosed and tagged for future maintenance. Combining the manufacturer's electrical characteristics of the breaker/equipment with actual usage data provides the remote services provider 104 with the data on when the breaker/equipment needs to be manually maintained, upgraded, replaced, etc.

The preventative and curtailment maintenance services may be utilized to improve cost savings and reliability, and using the reliability system 100 to coordinate between the utility and the facility. One scenario is that at the request of the utility, the critical facility can be taken off the grid and switched over to its own power sources. This would occur when the utility has too much predicted demand compared to the available supply and needs to manage its own resources. It would also occur if the utility knows of an upcoming outage possibly due to weather or predicted maintenance. A second scenario is where the utility requests that backup power supplies be utilized, but fed back onto the grid. This would occur when the utility is in need of excess capacity to fulfill their required demand. Another scenario is conducting a coordination study by a monitoring system such as the monitoring system 412 in FIG. 4 when the setting of a circuit breaker is changed. An identification of any point of potential failure identified by the coordination study is transmitted over the communications network included in the monitoring system 122 to personnel such as the facilities manager or a third party service provider such as the service provider 104.

The eService is a "smart reporting" service which provides reporting based on the actual requirements of the facility or its machines/products to the relevant stakeholders. For example, it is standard practice is to run a backup generator for one hour per month to ensure it is working, test the transfer switch, etc. However in practice it is done manually, where a user may "fudge" the data if it is close to passing, but does in fact fail (i.e., runs for 56 minutes, not 1 hour per requirement; transfer switch takes 12 seconds to re-energize the system, as opposed to the 10 seconds required by regulations). With the eService, the monitoring and recording of all the systems and the associated data is leveraged, and may provide an accurate report to the facility based on comparing test requirements to the actual standard. As an extension, this also gives the ability for key stakeholders (i.e., facility manager, CEO, etc) to have accurate and automated "on demand" reporting of the information.

Another eService may combine the facility information with external information that will impact the facility. Typically, the Facility Manager would not be aware of or have insight into this information. This includes tracking installed equipment for recalls via the manufacturer and automatically taking action on the impacted equipment with scheduled maintenance, or immediate replacement if warranted. This is beneficial to the facility as it consolidates the need to coordinate recalls and the required maintenance/replacement all in one event. Secondly it benefits the equipment suppliers as they now have the ability to get feedback from eServices on how many recalled pieces of equipment are in place, specifically how many are at a critical point and need to be repaired immediately, and how many have low-risk problems and maintenance or replacement can be deferred for a period of time.

Another instance is trending analysis of equipment characteristics across different facilities (clients of the third party) to drive predictive maintenance on devices. Often, a few data points on devices in one facility may not be enough to predict failure with high accuracy, but by combining data across customers it will provide enough statistical data to improve predictions of when maintenance is required. In practice if a generator only is tested for perhaps 1 hour, once per month (per the local standard) and a facility is small with only 1 generator, it does not have enough data to measure drift of runtime over a short period of time. However, combined with other similar generator data from other facilities, it gives enough information for eServices to analyze the information quickly to predict maintenance or failure appropriately. As well, it also gives a reference point for the monitored equipment against other locations to indicate why it may not be operating within range, or it is perhaps the "highest at risk" of all equipment so it should be investigated regardless.

Any of these algorithms include machine readable instructions for execution by: (a) a processor, (b) a controller, and/or (c) any other suitable processing device. It will be readily understood that the system 100 includes such a suitable processing device or devices. Any algorithm disclosed herein may be embodied in software stored on a tangible medium such as, for example, a flash memory, a CD-ROM, a floppy disk, a hard drive, a digital versatile disk (DVD), or other memory devices, but persons of ordinary skill in the art will readily appreciate that the entire algorithm and/or parts thereof could alternatively be executed by a device other than a controller and/or embodied in firmware or dedicated hardware in a well known manner (e.g., it may be implemented by an application specific integrated circuit (ASIC), a programmable logic device (PLD), a field programmable logic device (FPLD), discrete logic, etc.). Also, some or all of the machine readable instructions represented in a flowchart depicted herein may be implemented manually. Further, although specific algorithms are described with reference to flowcharts depicted herein, persons of ordinary skill in the art will readily appreciate that many other methods of implementing the example machine readable instructions may alternatively be used. For example, the order of execution of the blocks may be changed, and/or some of the blocks described may be changed, eliminated, or combined.

FIG. 8 is a flow diagram of an inventive evaluation process using the reliability system 100 in FIG. 1. The reliability system 100 may manage an electrical distribution system for a healthcare facility such as the hospital 102 in FIG. 1 having electrical loads that include critical loads requiring highly reliable power delivery such as in the operating room 124. The health care facility has a main utility power source such as the MV service entrance 142 for supplying power to the loads via the electrical distribution system and an alternate power source such as the generator 144 for supplying power to at least certain of the loads in the event of disruption of power from the main utility source. At least one automatic transfer switch selectively couples the main utility and alternate power sources to the loads. Information regarding the delivery of power to the loads from the main utility source is received over a communications network such as the communications network that is part of the monitoring system 122 (1000). The information includes the occurrence of trip conditions that interrupt the delivery of power to identified loads such as loads in the operating room 124.

An alarm is transmitted over the communications network when a trip condition occurs so that action may be taken to resume the delivery of power to loads to which power delivery has been interrupted (1002). The alarm is transmitted to at least communication stations associated with said critical loads such as the touchscreen panels 410 or workstation 422 in FIG. 4. An automatic transfer switch is instructed over the communications network to couple the alternate power source to the loads to which power delivery has been interrupted if the delivery of power to such loads is not restored within a preset time period (1004).

Information regarding the occurrences of trip conditions and uses of the alternate power source by load is stored and periodically evaluated (1006). An alert is transmitted over the communications network when the evaluation identifies a performance change for any load (1008). The alert may be generated automatically by the remote facilities management station such as the remote service provider 104. A maintenance action is initiated in response to the alert. The alert is communicated to a remote facilities management station such as that in the remote service provider 104 in the format of diagnostic information in real time. Such diagnostic information may include information regarding the remote re-closing of circuit breakers. The diagnostic information may also initiate a fault check to determine the causes of trip conditions and whether power delivery can be safely resumed.

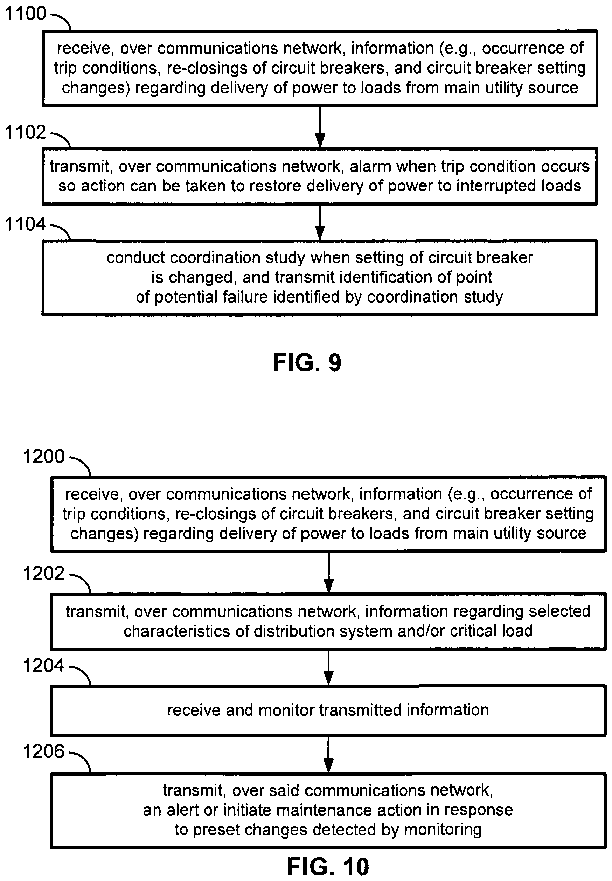

Another process, not covered by the claims, for managing the electrical distribution system for a healthcare facility such as the hospital 102 described above is shown FIG. 9. Information regarding the delivery of power to loads from the main utility source such as the MV service loop 142 is received over the communications network (1100). The information includes the occurrence of trip conditions that interrupt the delivery of power to identified loads, re-closings of circuit breakers, and changes in the settings of circuit breakers. An alarm is transmitted over the communications network when a trip condition occurs so that action can be taken to restore the delivery of power to loads to which power delivery has been interrupted (1102). The alarm is transmitted to at least communication stations such as the workstation 420 or 424 associated with the critical loads which are in the operating room 124 in this example. A standard coordination study is conducted by a controller such as the processor associated with a workstation when the setting of a circuit breaker is changed (1104). The coordination study may be conducted in real time if desired. An identification of any point of potential failure identified by the coordination study is transmitted over the network. The coordination study may identify a single most likely point of potential failure in said distribution system. A supervisor may initiate a maintenance mode of operation for the circuit breakers in response to said alert.

FIG. 10 shows another process, not covered by the claims, used by the reliability system 100 to manage the electrical distribution system for a healthcare facility such as the hospital 102 in FIG. 1. Information regarding the delivery of power to the loads in the hospital 102 from the main utility source is received over a communications network (1200). The information includes the occurrence of trip conditions that interrupt the delivery of power to identified loads, re-closings of circuit breakers, and changes in the settings of circuit breakers. Information regarding selected characteristics of at least one of the distribution system and a critical load is received over a communications network. The information is received and monitored (1204). An alert or communication initiating maintenance action is transmitted over the communications network in response to detected preset changes in the monitoring and in information regarding selected characteristics of at least one of said distribution system and a critical load (1206).

While particular embodiments and applications of the present invention have been illustrated and described, it is to be understood that the invention is not limited to the precise construction and compositions disclosed herein and that various modifications, changes, and variations may be apparent from the foregoing descriptions without departing from the scope of the invention as defined in the appended claims.

## Claims

1. A method of managing an electrical distribution system for a healthcare facility (102) having electrical loads that include critical loads requiring highly reliable power delivery, a main utility power source (142) for supplying power to said loads via said electrical distribution system, and an alternate power source (144) for supplying power to at least certain of the loads in the event of disruption of power from the main utility source, said method comprising:
receiving (1000), over a communications network, information regarding the delivery of power to said loads from said main utility power source, said information including the occurrence of trip conditions that interrupt the delivery of power to identified loads;
transmitting (1002), over said communications network, an alarm when a trip condition occurs so that action can be taken to resume the delivery of power to loads to which power delivery has been interrupted, said alarm being transmitted to at least communication stations associated with said critical loads;
instructing (1004), over said communications network, an automatic transfer switch to couple said alternate power source to said loads to which power delivery has been interrupted, if the delivery of power to such loads is not restored within a preset time period;
storing and periodically evaluating (1006) information regarding the occurrences of trip conditions and uses of said alternate power source by load, and transmitting (1008), over said communications network, an alert when said evaluation identifies a performance change for any load;
initiating a maintenance action in response to said alert; and
communicating said alert to a remote facilities management station in the format of diagnostic information in real time.

2. An electrical distribution system for a healthcare facility (102) having electrical loads that
include loads requiring highly reliable power delivery, the healthcare facility having a main utility power source (142) for supplying power to said loads via said electrical distribution system and an alternate power source (144) for supplying power to at least certain of the loads in the event of disruption of power from the main utility source, said electrical distribution system comprising an electrical power distribution system within said facility for supplying power to said loads;
monitoring devices (122) coupled to said electrical power distribution system for monitoring the power supplied to selected loads in said healthcare facility and detecting fault conditions; power interruption devices in said electrical power distribution system for interrupting the supply of power to selected loads in response to the detection of a fault condition;
a communications network coupled to said monitoring devices;
an automatic transfer switch (146); and a controller coupled to said monitoring devices, said interruption devices, said communications network and said automatic transfer swich; and
wherein the controller is configured to perform the method according to claim 1.

3. A computer program product, comprising one or more non-transitory tangible media having a computer readable program logic embodied therein, the computer readable program logic comprising instructions to cause the electrical distribution system according to claim 2 to perform the method according to claim 1.

## Patentansprüche

1. Verfahren zum Steuern eines elektrischen Verteilungssystems für eine Gesundheitseinrichtung (102) mit elektrischen Verbrauchern, die wichtige Verbraucher aufweisen, die eine äußerst zuverlässige Stromversorgung, eine Hauptversorgungsstromquelle (142) zum Versorgen der Verbraucher mit Energie über das elektrische Verteilungssystem und eine alternative Stromquelle (144) zum Versorgen von wenigstens bestimmten der Verbraucher mit Energie im Falle einer Unterbrechung der Stromversorgung von der Hauptversorgungsquelle erfordern, wobei das Verfahren umfasst:
Empfangen (1000) über ein Kommunikationsnetzwerk von Informationen bezüglich der Energiezufuhr für die Verbraucher von der Hauptversorgungsstromquelle, wobei die Informationen das Auftreten von Auslösebedingungen aufweisen, die die Energiezufuhr für identifizierte Verbraucher unterbrechen;
Übertragen (1002) über das Kommunikationsnetzwerk eines Alarms, wenn eine Auslösebedingung auftritt, so dass Maßnahmen ergriffen werden können, um die Energiezufuhr für die Verbraucher wieder aufzunehmen, zu denen die Stromzufuhr unterbrochen wurde, wobei der Alarm an wenigstens die Kommunikationsstationen übertragen wird, die den wichtigen Verbrauchern zugeordnet sind;
Anweisen (1004) über das Kommunikationsnetzwerk eines automatischen Umschalters, die alternative Energiequelle mit den Verbrauchern zu koppeln, deren Stromzufuhr unterbrochen wurde, wenn die Energiezufuhr zu solchen Verbrauchern nicht in einem voreingestellten Zeitraum wiederhergestellt wird;
Speichern und periodisches Auswerten (1006) von Informationen bezüglich des Auftretens von Auslösebedingungen und der Verwendung der alternativen Energiequelle durch Verbraucher und Übertragen (1008) über das Kommunikationsnetzwerk eines Alarms, wenn die Auswertung eine Leistungsänderung für einen beliebigen Verbraucher identifiziert;
Einleiten einer Wartungsmaßnahme in Reaktion auf den Alarm und
Kommunizieren des Alarms an eine entfernte Anlagensteuerungsstation im Format von Diagnoseinformationen in Echtzeit.

2. Elektrisches Verteilungssystem für eine Gesundheitseinrichtung (102) mit elektrischen Verbrauchern, die Verbraucher aufweisen, die eine äußerst zuverlässige Stromversorgung erfordern, wobei die Gesundheitseinrichtung eine Hauptversorgungsstromquelle (142) zum Versorgen der Verbraucher mit Energie über das elektrische Verteilungssystem und eine alternative Stromquelle (144) zum Versorgen von wenigstens bestimmten der Verbraucher mit Energie im Falle einer Stromunterbrechung von der Hauptversorgungsquelle hat, wobei das elektrische Verteilungssystem umfasst;
ein elektrisches Stromverteilungssystem in der Einrichtung zum Versorgen der Verbraucher mit Energie;
Überwachungsvorrichtungen (122), die mit dem elektrischen Energieverteilungssystem zum Überwachen der Energie, die den ausgewählten Verbrauchern in der Gesundheitseinrichtung geliefert wird, und zum Erfassen eines Fehlerzustands gekoppelt sind;
Stromunterbrechungsvorrichtungen in dem elektrischen Stromverteilungssystem zum Unterbrechen der Energiezufuhr für die ausgewählten Verbraucher in Reaktion auf das Erfassen eines Fehlerzustands;
ein Kommunikationsnetzwerk, das mit den Überwachungsvorrichtungen gekoppelt ist;
einen automatischen Umschalter (146) und
eine Steuerung, die mit den Überwachungsvorrichtungen, den Unterbrechungsvorrichtungen, dem Kommunikationsnetzwerk und dem automatischen Umschalter verbunden ist; und
wobei die Steuerung konfiguriert ist, um das Verfahren nach Anspruch 1 durchzuführen.

3. Computerprogrammprodukt, das ein oder mehrere nicht flüchtige physikalische Medien mit einer darin enthaltenen computerlesbaren Programmlogik umfasst, wobei die computerlesbare Programmlogik Anweisungen umfasst, um das elektrische Verteilungssystem nach Anspruch 2 das Verfahren nach Anspruch 1 durchzuführen zu lassen.

## Revendications

1. Procédé de gestion d'un système de distribution électrique pour un établissement de soins de santé (102) présentant des charges électriques qui comprennent des charges critiques nécessitant une fourniture d'énergie hautement fiable, une source d'énergie de service public principale (142) pour fournir de l'énergie auxdites charges par l'intermédiaire dudit système de distribution électrique, et une source d'énergie de remplacement (144) pour fournir de l'énergie à au moins certaines des charges dans le cas d'une interruption de l'énergie provenant de la source de service public principale, ledit procédé comprenant les étapes consistant à:
recevoir (1000), par l'intermédiaire d'un réseau de communication, des informations concernant la fourniture d'énergie auxdites charges à partir de ladite source d'énergie de service public principale, lesdites informations comprenant l'apparition de conditions de déclenchement qui interrompent la fourniture d'énergie aux charges identifiées;
transmettre (1002), sur ledit réseau de communication, une alarme lorsqu'une condition de déclenchement se produit de sorte que des mesures peuvent être prises pour reprendre la fourniture de puissance à des charges auxquelles la fourniture de puissance a été interrompue, ladite alarme étant transmise à au moins des stations de communication associées auxdites charges critiques;
instruire (1004), sur ledit réseau de communications, un commutateur de transfert automatique pour coupler ladite source d'alimentation alternative auxdites charges auxquelles l'alimentation a été interrompue, si l'alimentation de ces charges n'est pas rétablie dans une période de temps prédéfinie;
stocker et évaluer périodiquement (1006) des informations concernant les occurrences de conditions de déclenchement et d'utilisations de ladite source d'alimentation alternative par charge, et transmettre (1008), sur ledit réseau de communications, une alerte lorsque ladite évaluation identifie un changement de performance pour une charge quelconque;
initier une action de maintenance en réponse à ladite alerte; et
communiquer ladite alerte à une station de gestion des installations à distance sous la forme d'informations de diagnostic en temps réel.

2. Système de distribution électrique pour un établissement de soins de santé (102) ayant des charges électriques qui comprennent des charges nécessitant une fourniture d'énergie hautement fiable, l'établissement de soins de santé présentant une source d'énergie de service public principale (142) pour fournir de l'énergie auxdites charges via ledit système de distribution électrique et une source d'énergie alternative (144) pour fournir de l'énergie à au moins certaines des charges dans le cas d'une interruption de l'énergie provenant de la source de service public principale, ledit système de distribution électrique comprenant:
un système de distribution d'énergie électrique à l'intérieur de ladite installation pour fournir de l'énergie auxdites charges;
des dispositifs de surveillance (122) couplés audit système de distribution d'énergie électrique pour surveiller l'énergie fournie à des charges sélectionnées dans ledit établissement de soins de santé et détecter des conditions de défaut;
des dispositifs d'interruption de l'alimentation dans ledit système de distribution d'énergie électrique pour interrompre l'alimentation de charges sélectionnées en réponse à la détection d'une condition de défaut;
un réseau de communication couplé auxdits dispositifs de surveillance;
un commutateur de transfert automatique (146); et
un dispositif de commande couplé auxdits dispositifs de surveillance, auxdits dispositifs d'interruption, audit réseau de communication et audit commutateur de transfert automatique; et
dans lequel le dispositif de commande est configuré pour exécuter le procédé selon la revendication 1.

3. Produit de programme informatique, comprenant un ou plusieurs supports tangibles non transitoires présentant une logique de programme lisible par ordinateur incorporée dans ceux-ci, la logique de programme lisible par ordinateur comprenant des instructions pour faire en sorte que le système de distribution électrique selon la revendication 2 exécute le procédé selon la revendication 1.
